(19) Europäisches Patentamt
European Patent Office
Office européen des brevets

(11) **EP 3 477 497 A1**

(12) **EUROPEAN PATENT APPLICATION**

(43) Date of publication:
**01.05.2019 Bulletin 2019/18**

(51) Int Cl.:
***G06F 17/28*** *(2006.01)*

(21) Application number: **17198121.0**

(22) Date of filing: **24.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Televic Education NV**
**8870 Izegem (BE)**

(72) Inventors:
- **Vanlerberghe, Filip Robert Maria**
  **8860 Lendelede (BE)**
- **Lagatie, Ruben**
  **8980 Geluveld (BE)**
- **Staelens, Nicolas**
  **8530 Harelbeke (BE)**

(74) Representative: **IP HILLS NV**
**Hubert Frère-Orbanlaan 329**
**9000 Gent (BE)**

(54) **A REVISION SYSTEM AND METHOD FOR REVISING TRANSLATED TEXTS WITH ADAPTIVE SCORES**

(57)     A revision system (100) for revising translated texts (111 ... 11k) is configured to receive a set (101) of translated texts (111 ... 11k) of a single source text. The revision system (100) comprises:
- a translation error memory (110) to store translation errors and respective scores (200; 300; 401) for the translation errors; and
- a revision module (120) configured to search for the translation errors in the translated texts (111 ... 11k) and to determine an overall score for the translated texts (111 ... 11k).

The revised translated texts (111 ... 11k) are stored in a revised text memory (130), together with the translation errors found therein and the overall scores. The revision system (100) further comprises a score adaptation module (140) configured to determine adapted scores (402) for the translation errors as a function of the set of overall scores determined for the set of translated texts (111 ... 11k).

300

| ERROR | TRANSLATOR | SCORE |
|-------|------------|-------|
| E1 | T1 | S11 |
| … | … | … |
| E1 | Tm | S1m |
| E2 | T1 | S21 |
| … | … | … |
| E2 | Tm | S2m |
| … | … | … |
| En | T1 | Sn1 |
| … | … | … |
| En | Tm | Snm |

Fig. 3

EP 3 477 497 A1

**Description**

**Field of the Invention**

This invention relates to a revision system and method for revising a set of translated texts. More particularly, the invention relates to a revision system and method to revise a plurality of translated texts that represent translations of a same source text by different translators, e.g. student translators. The invention aims at improving the dynamics in scoring translated texts while guarding the objectiveness and fairness.

**Background of the Invention**

A revision system for revising a plurality of translations of a same source text produced by different translators is useful for instance in an educational or training context, where the translated texts of a substantial number of student translators must be revised and scored objectively. The skilled person however shall appreciate that such revision system is also useful in alternative applications, such as for example evaluating the performance of a plurality of translators, etc.
A revision system for translations is already known from the bachelor's diploma thesis "A Hybrid Approach to Parallel Text Alignment" from the author Adam Obrusnik, published by the Masaryk University Faculty of Arts in 2012, and retrievable via:

https://is.muni.cz/th/356468/ff_b/Obrusnik_Automatic_alignment_ BA_Thesis.pdf

This revision system described by Obrusnik is marketed as the Hypal system and made available as an online tool via www.hypal.eu. Hypal displays the source text and a translated text of this source text in an aligned manner to a revisor. As further described in the bachelor's diploma thesis "Defining an Error Typology: the Case of CELTraC" from the author Simon Javora, published by the Masaryk University Faculty of Arts in 2015, more precisely "section 4 HYPAL" thereof, the revisor can identify translation errors by marking or highlighting a wrong word or expression in an error tagging interface for the translated text. The marked translation error can be assigned an error category. The translation error is thereupon highlighted with a particular color associated with the error category. Optionally, a correction can be entered by the revisor. Hypal enables a revisor or teacher, by means of an error statistics section, to view and analyze the frequency of appearance of various error categories in one specific translation or for one specific translator.
In general, two types of revision methods can be distinguished. The first type of revision involves manual revision of the translated texts, one after the other, by a revisor. Manual revision however remains labour intensive, and does not always result in objective revisions. It remains difficult to guarantee consistency, which is required when translations are scored in the context of an exam, an educational test or a hiring assessment. In such a context, it is important that for every translation in the set, all identical errors are found and the same penalty or negative score is applied for identical translation errors. In addition to poor consistency with respect to scoring, such manual revision often also does not enable to provide consistent and constructive feedback like possible corrections for identical translation errors across translated texts of the set.
The second type of revision systems relies on a revision memory or translation error memory wherein errors or wrong translations are stored. Such revision system shall suggest errors present in a translated text to the revisor of the translated text, and the revisor shall accept or reject a translation error suggested by the system. The system obviously only suggests translation errors it already knows, i.e. translation errors that are stored in the revision memory. In case new translation errors are identified by the revisor, the system stores such new error in the revision memory and checks if such new error also appears in previously revised translated texts that are stored in a revised texts memory, or in translated texts that are not revised yet. Revised text memory in this context must be interpreted broadly to cover any memory, database, cloud store, etc., wherein the translated texts and the translation errors already identified therein are memorized. This way, revision of a set of translations of a same source text is objectified.
Even with a revision system based on a revision memory, revision of a set of translated texts of the same source text, generated by different translators, remains a tedious, repetitive and labour-intensive task for the revisor. After having revised the set of translations, each translation will have an overall score assigned. This overall score typically results from a maximum score, e.g. 20, reduced with penalties, i.e. negative scores associated with the translation errors identified in the translation and accepted by the revisor. The penalties or scores may be different for different translation errors. Translation errors may for instance be categorized depending on their severity and higher negative scores may be associated with more severe error categories. The assignment of scores however is static. As a consequence, the overall score determined for a translated text may become negative, e.g. -7, or the range of overall scores for all revised translations may not match the revisor's expectations. Despite the time and effort spent in revising the translated texts, the revision system based on a revision memory may end up with overall scores that are disputable. Straightforward solutions could be found in installing a lower limit of zero for the overall scores, or increasing all overall scores with a rectifying positive score while installing an upper limit equal to the maximum score. Both solutions have as disadvantage that the rectifying measures are not objective: translated texts with a low overall score tend to benefit more than translated texts with a high overall score. Moreover, the measures do not enable to bring the overall scores within a range that matches the revisor's expectations.

It is therefore an objective of the present invention to disclose a revision system for revising a set of translated texts with improved overall score assignment, i.e. a revision system that no longer statically assigns scores to translation errors, and that avoids that a revisor has to take rectifying measures that lack objectiveness and fairness.

## Summary of the Invention

According to the present invention, the above defined objective is realized by the revision system for revising translated texts as defined by claim 1, the revision system being configured to receive:

- a set of translated texts of a single source text,

and the revision system comprising:

- a translation error memory configured to store translation errors associated with the translated texts and respective scores for the translation errors;
- a revision module configured to search for the translation errors in a translated text out of the set, to determine an overall score for the translated text from scores corresponding to translation errors found in the translated text, and to store the translated text together with the translation errors found in the translated text and the overall score for the translated text as a revised translated text in a revised text memory; and
- a score adaptation module configured to determine adapted scores for the translation errors in the translation error memory as a function of the set of overall scores determined by the revision module for the set of translated texts stored in the revised text memory.

Thus, the revision system according to the invention dynamically and automatically adapts the scores assigned to translation errors in view of the overall scores as determined for the set of translated texts on the basis of the original, non-adapted scores. The revised translated texts and their initial scores based on the original, non-adapted scores are assumed to be stored in a revised text memory. Revised text memory in this context must be interpreted broadly to cover any memory, database, cloud store, etc., wherein the translated texts and the translation errors already identified therein are memorized. This may for instance be integral part of the database wherein also the source text and the (non-revised) translated texts are stored. The scores assigned to individual translation errors may be adapted and/or the scores assigned to error categories may be adapted as a result of which the scores assigned to all errors that belong to those error categories will be adapted. By adapting the scores assigned to translation errors or to severity categories that group certain errors according to their severity in view of the overall scores determined for the translated texts in the set, these overall scores are also automatically adapted to what becomes an acceptable set or interval of overall scores for the revisor without loss of objectiveness and without unfair measures that bring relative more advantage or disadvantage to certain translators. The score adaptation module reduces the time and effort spent by a revisor to adjust the set of overall scores for a set of translated texts to an acceptable interval of scores while maintaining fairness between the overall scores assigned to the translations in the set.

In embodiments of the revision system according the present invention defined by claim 2, the revision module is configured to determine an adapted overall score for the translated texts from the adapted scores.

Indeed, preferably, the revision system does not only adapt the scores assigned to translation errors or severity categories, but also automatically re-assesses the set of translations to determine for each of the translated texts an adapted overall score that is then supposed to lie within the acceptable interval of overall scores.

In embodiments of the revision system according to the present invention defined by claim 3, the translation error memory is configured to associate a severity category with each translation error, and configured to associate a respective score with each severity category.

Indeed, as already indicated here above, translation errors may be categorized according to their severity in severity categories. The associated severity category may be memorized in the translation error memory. The use of severity categories brings the advantage that translation errors of a same or similar severity result in the same negative score being applied across all translations, also after the automatic score adaptation has taken place.

In embodiments of the revision system according to the present invention defined by claim 4, the translation error memory is configured to associate a severity category with each translation error and each translator, and configured to associate a respective score with each severity category.

Indeed, instead of associating a single score to a severity category, the translation error memory in certain embodiments of the invention may be configured to enable associating different scores for the same severity category to different translators. This way, a translator that repeatedly made translation errors of a certain severity category may be penalized with a higher negative score than a translator who makes a translation error of that same severity category for the first time. Personalizing the scores or penalties within an error severity category may also be part of the automated adaptation. Thus the adaptation of a score for a translation error or a severity category may differ from translator to translator, depending on the history of the translator, i.e. the amount of times that same translation error or a translation error belonging to that same severity category has already been made by the translator in previous translations. Similarly, positive scores or bonus scores could be applied if a translation error or translation errors belonging to a certain severity category are no longer made by a translator that historically often made that error or errors of that severity category.

In embodiments of the revision system according to the present invention, as defined by claim 5, the score adaptation module is further configured to:

- determine the highest overall score in the set of overall scores;
- determine the lowest overall score in the set of overall scores;
- obtain a desired highest overall score for the set of translated texts from a revisor;
- obtain a desired lowest overall score for the set of translated texts from the revisor; and
- adapt the scores for the translation errors such that the set of overall scores ranging from the lowest overall score to the highest overall score is re-scaled into a set of adapted overall scores ranging from the desired lowest overall score to the desired highest overall score.

This way, the range of overall scores, i.e. the interval from the lowest overall score to the highest overall score based on the non-adapted error scores, is re-scaled into a range of scores that is acceptable according to the revisor, i.e. the interval from the desired lowest overall score to the desired highest overall score. The revisor may select the desired highest overall score by revising the translation with the highest overall score and assessing the overall quality of that "best" translation. Similarly, the revisor may determine the desired lowest overall score by revising the translation with the lowest overall score and assessing the overall quality of that "worst" translation. Once the desired lowest overall score and desired highest overall score are obtained from the revisor the score adaptation module applies a score adaptation algorithm. It may for instance count the amount of translation errors in the different severity categories present in the "worst" translation. Similarly, it may count the amount of translation errors in the different severity categories present in the "best" translation. With this knowledge, the score adaptation module can then adapt the scores of the different severity categories such that the adapted overall score of the "worst" translation, i.e. the maximum score minus the error scores of the severity categories respectively multiplied with the amount of errors in these severity categories present in the "worst" translation, equals the desired lowest overall score and such that the adapted overall score of the "best" translation, i.e. the maximum score minus the error scores of the severity categories respectively multiplied with the amount of errors in these severity categories present in the "best" translation, equals the desired highest overall score. Once the adapted scores are known, the adapted overall scores of all translations can be determined.

In embodiments of the revision system according to the present invention, as defined by claim 6, the revision module is further configured to optionally apply a score associated with a translation error only once in determining the overall score for the translated text when the translation error is found multiple times in the translated text.

Indeed, a translation error that appears multiple times in the same translation of the source text may optionally be penalized only once by applying the negative score associated with that translation error or the severity category where it belongs to only once. The revisor in other words may be given control to decide for each individual translation error if the corresponding penalty should be applied only once in case of multiple appearance of that same error in a single translation or alternatively if the corresponding penalty should be applied multiple times in case of multiple appearance of that same error in a single translation. This way, fairness in revising translations may be further enhanced. On the other hand, as explained above, the same translation error may optionally also be penalized with a higher negative score when it is made repeatedly by the same translator in different translations of different source texts.

In addition to a revision system as defined by claim 1, the present invention also concerns a corresponding method for revising translated texts as defined by claim 7, the method comprising:

- receiving a set of translated texts of a single source text;
- storing translation errors associated with the translated texts and respective scores for the translation errors in a translation error memory;
- searching for the translation errors in a translated text out of the set, and determining an overall score for the translated text from scores corresponding to translation errors found in the translated text;
- storing the translated text together with the translation errors found in the translated text and the overall score for the translated text as a revised translated text in a revised text memory; and
- determining adapted scores for the translation errors in the translation error memory as a function of the set of overall scores determined for the set of translated texts stored in the revised text memory.

## Brief Description of the Drawings

Fig. 1 illustrates an embodiment of the revision system 100 according to the present invention;

Fig. 2 illustrates a first implementation of the translation error memory 110 in an embodiment of the revision system 100 according to the present invention;

Fig. 3 illustrates a second implementation of the translation error memory 110 in an embodiment of the revision system 100 according to the present invention;

Fig. 4A, Fig. 4B and Fig. 4C illustrate the operation of the score adaptation module 140 in an embodiment of the revision system 100 according to the present invention; and

Fig. 5 illustrates a suitable computing system 500 for realizing methods and devices according to embodiments of the invention.

## Detailed Description of Embodiment(s)

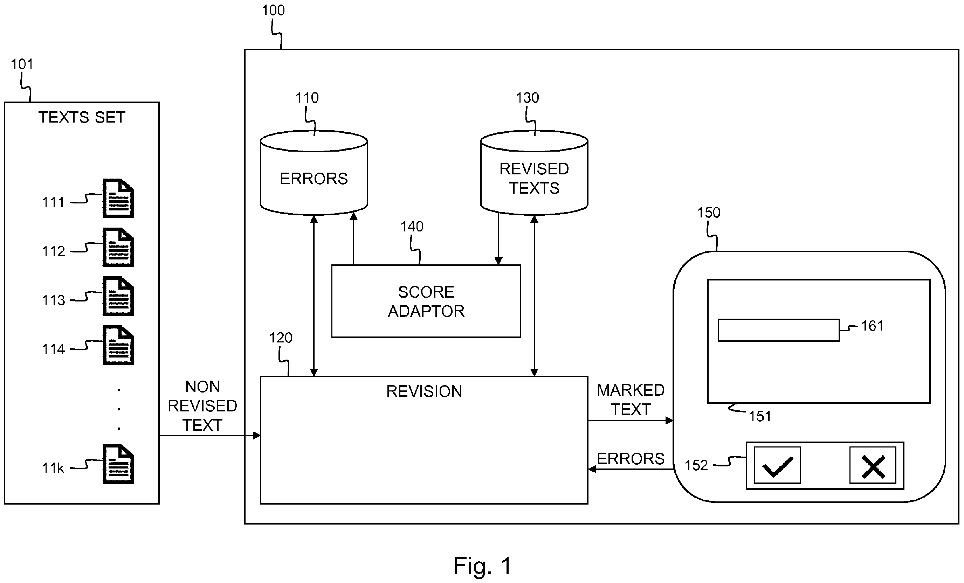

The revision system 100 drawn in Fig. 1 is a productivity tool that enables a revisor to efficiently and objectively revise a set 101 of translated texts 111, 112, 113, 114, ..., 11 k that represent translations of the same source text. The translations 111-11 k may for instance be produced by student translators in the course of a test or exam. The revision system 100 relies on an error memory 110 instead of a traditional translation memory that would contain correct translations for certain phrases or sentences in the source text. The error memory 110 memorizes translation errors or wrong translations of words, phrases, sentences, expressions, etc. for the source text. The error memory 110 may contain translation errors that are predefined, i.e. errors that the revisor or editor of the source text expects to be made and that are entered in the error memory 110 upfront, before any revision has taken place. The error memory 110 further memorizes translation errors that are identified by the revisor while revising the translated texts 111-11k. In relation to each translation error, the error memory 110 may also memorize corrections, i.e. substitute words, phrases, sentences, expressions, etc. that could be used to correct the respective translation errors. In relation to each translation error or in relation to categories of errors, the error memory 110 also memorize a penalty or a negative score to be applied when the error appears in translations. The error database 110 will enable a revision module 120 in the revision system 100 to suggest errors in non-revised translations 111-11 k to the revisor, and will further enable the revision module 120 to check if new errors identified by a revisior while revising one of the translations also appear in already revised translations. These revised translated texts are stored in a revised texts memory 130. Thanks to the error memory 110, the productivity and efficiency of the revisor is improved, and revising a set of translated texts 111-11k is objectivised as identical errors will be detected and penalized similarly across all translated texts 111-11k. The revision module 120 thereto imports a non-revised text 111-11k, for instance the non-revised text that the revisor selects for revision or the next non-revised text in line for revision. The revision module 120 scans the imported non-revised text for the translation errors contained in the error database 110 and marks the detected translation errors in a marked version of the translated text that is outputted to display 150 for being displayed to the revisor. The revisor can then either accept or reject the errors suggested by the revision module 120 by selecting the suggested error in the displayed marked-up text 151 and using the acceptance/rejection buttons 152. In addition to the suggested errors, the translator may identify new errors 161 while revising the displayed translated text 151. When such new error 161 is identified by the revisor, the error is reported back to the revision module 120 that stores the error in error database 110 and automatically checks if the new identified error also appears in already revised texts stored in the revised texts memory 130.

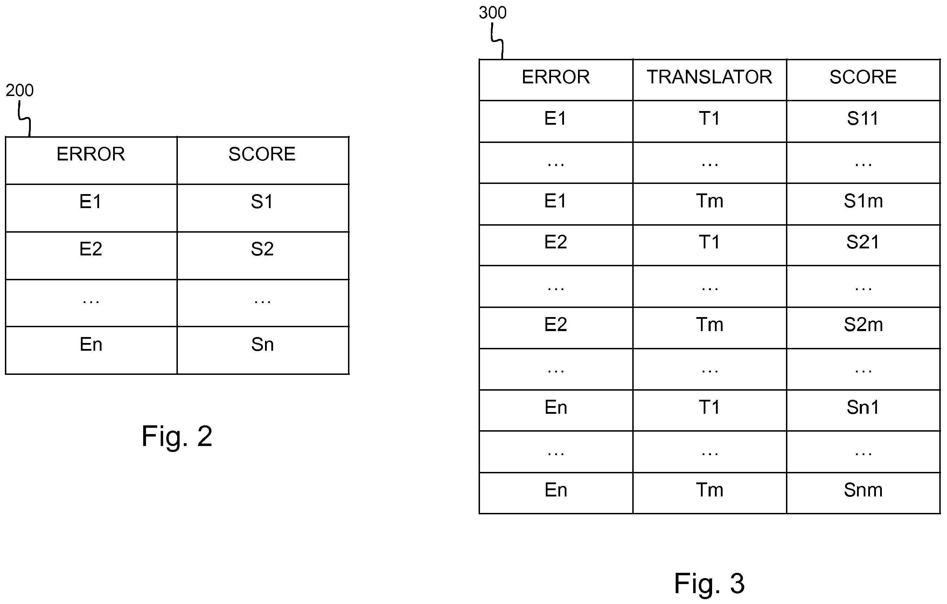

When revising a translated text, the revision module 120 determines an overall score for the translated text. The overall score is typically obtained by applying penalties or negative scores for translation errors detected in the translated text. The negative score to be applied for an error is memorized in the error database 110. In alternative embodiments of the system according to the invention, the negative scores may be memorized in a separate score memory that is consulted by the revision module 120. A negative score may be associated with each error, or the errors may be categorized in severity categories, each severity category grouping the translation errors that are penalized with the same negative score. In more advanced embodiments, the negative score associated with an error or with a severity category may differ between translators. This way, a translator making a translation error for the first time or making a certain type of translation error for the first time may be penalized less than a translator that repetitively makes this error or this type of error over time across multiple translations. Fig. 2 for instance shows a first implementation of a score table 200 that may be memorized in the error database 110. In the score table 200 of Fig. 2, negative scores S1, S2, ..., Sn are associated with respective error categories E1, E2, ... En. The assignment of a negative score to an error category, e.g. the assignment of S2 to E2, may be preconfigured or may be entered by the revisor the first time a translation error of the respective severity category E2 is encountered. In addition to score table 200, the error memory 110 also must memorize for each translation error the severity category where it belongs to. Also this association between errors and severity categories may be preconfigured or entered by the revisor the first time the translation error is detected in a translated text. Fig. 3 shows an alternative implementation of a score table 300 that may be memorized in the error database 110 or alternatively in a separate score memory. In the score table 300 of Fig. 3, negative scores S11 ... S1m, S21 ... S2m, ..., Sn1 ... Snm are associated with respective tuples of error categories and translators (E1, T1) ... (E1, TM), (E2, T1)... (E2, Tm), ..., (En, T1)... (En, Tm). In comparison with the score table 200 of Fig. 2, the score table 300 of Fig. 3 brings the advantage that a same translation error or a same type of translation error can be penalized differently for different translators, bringing the above described flexibility. The revision module 120 hence consults the applicable score table, e.g. 200 or 300, in revising the translated texts 111 ... 11k, determines an overall score for each of the translated texts 111 ... 11k and stores the revised translated texts together with their respective overall scores and identified errors in the revised texts memory 130.

A result of the automated or semi-automated revision by revision module 120 is that the overall scores determined for the translated texts 111-11k may lie outside acceptable boundaries. Since a revisor cannot predict the number of errors the translators are likely to make, using the traditional rigid score mechanism with a penalty or negative score being subtracted from a maximum score for every occurrence of an error may result for instance in the worst overall score being -15/20 and the best overall score being 2/20 for a certain source text to be translated by k translators. In case bonus points are applied for perfect translations of certain phrases in the source text, the revisor may also end up with an overall score of 20/20 or even higher for a certain translated text whereas really severe translation errors may have been made in the translation. To cope with the problem of inacceptable or undesired overall scores, the score adaptor 140 in the revision system 100 shall automatically adapt the score table, e.g. table 200 or 300, once all texts have been revised. The score adaptor 140 thereto selects the revised translation with the lowest score, i.e. the "worst" translation, presents this worst translation to the revisor and obtains from the revisor a desired overall score for the worst translation. Similarly, the score adaptor 140 selects the revised translation with the highest score, i.e. the "best" translation, presents this best translation to the revisor and obtains from the revisor a desired overall score for the best translation. Using the desired overall score for the worst translation and the desired overall score for the best translation, and possibly one or more side conditions that may be preconfigured or entered by the revisor, the score adaptor 140 adjusts the scores in the applicable score table such that the adapted overall score of the worst translation, determined by applying the adapted score table, becomes equal to the desired overall score for the worst translation and such that the overall score of the best translation, determined by applying the adapted score table, becomes equal to the desired overall score for the best translation. Evidently, the adapted overall scores determined for all other translated texts in the set using the adapted score table, will fall within the interval ranging from the desired overall score for the worst translation to the desired overall score for the best translation. Once the score table is adapted by the score adaptor 140, the revision module 120 is given instruction to determine the adapted overall scores for the translated texts 111 ... 11k, and to store the revised translated texts together with the identified errors and the adapted overall scores in th revised text memory 130.

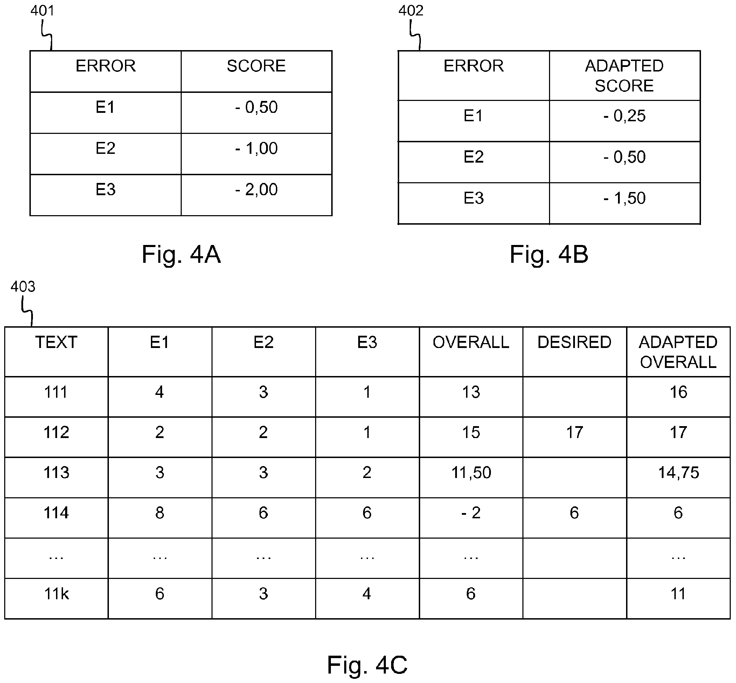

Fig. 4 illustrates the operation of the score adaptor 140 in a specific example where an initial score table 401 is used to determine the overall scores for translated texts 111 ... 11k, these overall scores are used to obtain desired boundaries for the overall scores from the revisor, the desired boundaries are used to determine an adapted score table 402, and the adapted score table 402 is used to determine the final, adapted overall scores for the translated texts 111 ... 11k. The initial score table 401 lists three severity categories for the errors. Errors of severity category E1 are penalized with a score of -0,50, errors of severity category E2 are penalized with a score of -1,00, and errors of severity category E3 are penalized with a score of -2,00. Table 403 further gives an overview of the amount of errors of each severity category E1, E2 and E3 identified in the respective translated texts 111, 112, 113, 114 ... 11 k by revision module 120. In translated text 111, revision module 120 identified 4 errors of severity category E1, 3 errors of severity category 3 and 1 error of severity category E3. As it is assumed that the maximum score is 20/20, applying the initial score table 401 results in an overall score of 20 - 4 x 0,50 - 3 x 1,00 - 1 x 2,00 = 13 for translation 111. In translated text 112, revision module 120 identified 2 errors of severity category E1, 2 errors of severity category 3 and 1 error of severity category E3. Applying the initial score table 401 results in an overall score of 20 - 2 x 0,50 - 2 x 1,00 - 1 x 2,00 = 15 for translation 112. In translated text 113, revision module 120 identified 3 errors of severity category E1, 3 errors of severity category 3 and 2 errors of severity category E3. Applying the initial score table 401 results in an overall score of 20 - 3 x 0,50 - 3 x 1,00 - 2 x 2,00 = 11,50 for translation 113. In translated text 114, revision module 120 identified 8 errors of severity category E1, 8 errors of severity category 3 and 6 errors of severity category E3. Applying the initial score table 401 results in an overall score of 20 - 8 x 0,50 - 6 x 1,00 - 6 x 2,00 = -2 for translation 114. In translated text 11 k, revision module 120 identified 6 errors of severity category E1, 3 errors of severity category 3 and 4 errors of severity category E3. Applying the initial score table 401 results in an overall score of 20 - 6 x 0,50 - 3 x 1,00 - 4 x 2,00 = 6 for translation 113. The revised translated texts 111, 112, 113, 114, ..., 11k, the identified errors therein and the respective overall scores 13, 15, 11,50, -2, ..., 6 are stored in the revised texts memory 130. The score adaptor 140 selects the worst translation, i.e. translation 114 with overall score -2, and presents this translation 114 to the revisor in order to obtain a desired overall score from the revisor for this translation 114, i.e. a lower boundary for the adapted overall scores. The revisor can now estimate what would be a fair overall quotation given the overall quality of this worst translation 114. In table 403, it is assumed that the desired overall score for the worst translation 114 obtained from the revisor is 6. Similarly, the score adaptor 140 selects the best translation, i.e. translation 112 with overall score 15, and presents this translation 112 to the revisor in order to obtain a desired overall score from the revisor for this translation 112, i.e. an upper boundary for the adapted overall scores. The revisor can now estimate what would be a fair overall quotation given the overall quality of this best translation 112. In table 403, it is assumed that the desired overall score for the best translation 112 obtained from the revisor is 17. From the desired overall score 6 for the worst translation 114 and the desired overall score 17 for the best translation 112, the score adaptor 140 determines adapted scores for the different severity categories E1, E2 and E3. A first condition imposed on the adapted scores is that the adapted overall score determined for the worst translation 114 using the adapted scores must equal the desired lower boundary of 6. Thus:

$$20 + 8 \times AS1 + 6 \times AS2 + 6 \times AS3 = 6 \qquad (1)$$

Herein, AS1 represents the adapted score for the first severity category E1, AS2 represents the adapted score for the second severity category, and AS3 represents the adapted score for the third severity category. A second condition imposed on the adapted scores is that the adapted overall score determined for the best translation 112 using the adapted scores must equal the desired upper boundary of 17. Thus:

$$20 + 2 \times AS1 + 2 \times AS2 + 1 \times AS3 = 17 \qquad (2)$$

The revisor or system may impose a third, side condition. It may for instance be desired that errors of the second severity category E2 are penalized twice as hard as errors of the first severity category E1. Thus:

$$AS2 = 2 \times AS1 \qquad (3)$$

The score adaptor 140 satisfying the conditions (1), (2) and (3) will set the adapted score AS1 for the first severity category equal to -0,25, will set the adapted score AS2 for the second severity category E2 equal to -0,50, and will set the adapted score AS3 for the third severity category E3 equal to -1,50. This results in adapted score table 402 being stored in error memory 110. Using the adapted score table 402, the revision module 120 shall then determine the adapted overall scores for the translations 111, 112, 113, 114, ..., 11k. For the translated text 111, the adapted overall score is determined as 20 - 4 x 0,25 - 3 x 0,50 - 1 x 1,50 = 16. For the translated text 112, the adapted overall score is determined as 20 - 2 x 0,25 - 2 x 0,50 - 1 x 1,50 = 17. For the translated text 113, the adapted overall score is determined as 20 - 3 x 0,25 - 3 x 0,50 - 2 x 1,50 = 14,75. For the translated text 114, the adapted overall score is determined as 20 - 8 x 0,25 - 6 x 0,50 - 6 x 1,50 = 6. For the translated text 11k, the adapted overall score is determined as 20 - 6 x 0,25 - 3 x 0,50 - 4 x 1,50 = 11. The adapted scores for the texts 111, 112, 113, 114, ..., 11k are listed in the rightmost column of table 403. The revised translated texts, the respective errors identified therein, and the adapted overall scores are stored in revised texts memory 130. As a result of the automated score adaptation, the adapted overall scores of all translated texts 111-11k in the set 101 are lying within acceptable boundaries. No negative overall scores are obtained and no scores of 20 or higher are obtained for translations that still contain severe errors.

Although the score adaptation algorithm applied by the score adaptor 140 in the above embodiment adapts the scores in function of the desired overall scores for the best translation and worst translation, possibly supplemented with one or more side condition(s) imposed by the revisor, alternative embodiments of the score adaptation algorithm may take other parameters into account when adapting the scores. A particular error or severity category may for instance be marked such that it influences the score only once per translation. As a result, even if a translator makes the same translation error 5 times within a single translated text - which may be perceived well, because the translator at least works consistently - the related negative score will be applied only once. Alternative implementations of the score adaptor may consider the total number of errors in each severity category across all translations. Still other implementations of the score adaptor may consider the history or profile of a translator. If a translator made an error that is now scored as -0.5 many times before in other translations that were revised in the past, the score adaptor may increase the penalty for this translator and this particular error for instance to -1. Obviously, such implementation of the score adaptor requires that the error memory is configured to store a score table as depicted in Fig. 3, with flexibility to adapt scores per error/error category and per translator. Implementations of the score adaptor may also provide the flexibility to provide bonus points, i.e. positive scores, when certain translation errors are not made, or when certain translation errors are no longer made by a particular translator. Such bonus points may require further adaptation of the score table as the error memory may have to memorize for particular errors/error categories, or for tuples of errors and translators what the bonus score is when the error is not made or what th bonus score is when the error is not made by a particular translator.

As a result of applying the adaptive scoring according to the present invention, certain translator's position may change in the ranking of translators. This may definitely be the case when everyone's translation history is taken into account and penalties are personalized depending on the translator's history. Overall, it results in scores ending up between acceptable boundaries for all translators, while retaining the objectivity in scoring and ranking the translators.

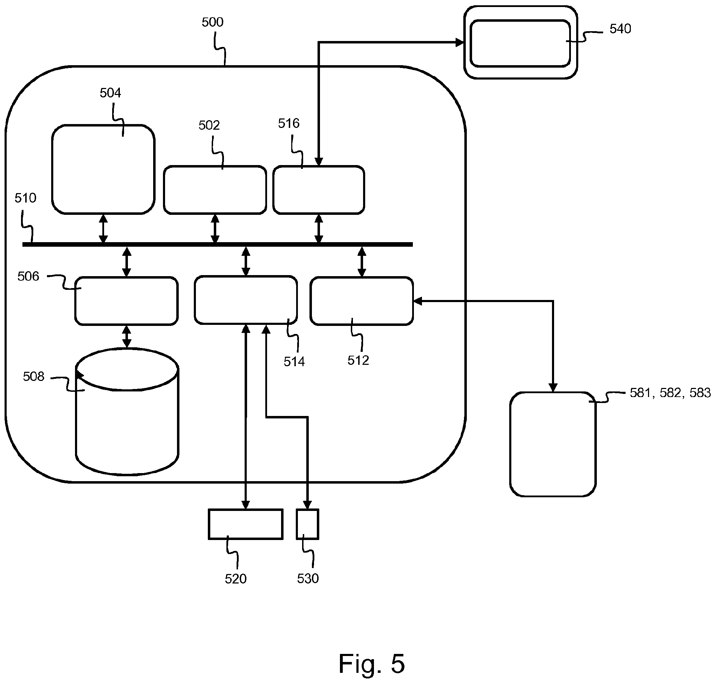

Fig. 5 shows a suitable computing system 500 enabling to implement embodiments of the method for revising translated texts with automated score adaptation according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, - ROM disk, solid state drives, flash memory cards, ... could be used. It is noticed that the entire method according to the present invention can be executed centralized, e.g. on a server in a management centre or in a cloud system, or it can be partially executed on a remote electronic device, e.g. worn by the user, and partially on a central server. Computing system 500 could thus correspond to the processing system available centrally or the processing system available in the electronic device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A revision system (100) for revising translated texts (111 ... 11k), said revision system (100) being configured to receive:

   - a set (101) of translated texts (111 ... 11k) of a single source text,

   said revision system (100) comprising:

   - a translation error memory (110) configured to store translation errors associated with said translated texts and respective scores (200; 300; 401) for said translation errors;
   - a revision module (120) configured to search for said translation errors in a translated text (111 ... 11k) out of said set (101), to determine an overall score for said translated text (111 ... 11k) from scores corresponding to translation errors found in said translated text, and to store said translated text (111 ... 11k) together with said translation errors found in said translated text (111 ... 11k) and said overall score for said translated text (111 ... 11k) as a revised translated text in a revised text memory (130),

   **CHARACTERISED IN THAT** said revision system (100) further comprises:

   - a score adaptation module (140) configured to determine adapted scores (402) for said translation errors in said translation error memory as a function of the set of overall scores determined by said revision module (120) for said set of translated texts (111 ... 11k) stored in said revised text memory (130).

2. A revision system (100) according to claim 1, wherein said revision module (120) is configured to determine an adapted overall score for said translated texts (111 ... 11k) from said adapted scores (402).

3. A revision system (100) according to claim 1, wherein said translation error memory (110) is configured to associate a severity category with each translation error, and configured to associate a respective score (200; 401) with each severity category.

4. A revision system (100) according to claim 1, wherein said translation error memory (110) is configured to associate a severity category with each translation error and each translator, and configured to associate a respective score (300) with each severity category.

5. A revision system according to claim 1, wherein said score adaptation module (140) is further configured to:

   - determine the highest overall score in said set of overall scores;
   - determine the lowest overall score in said set of overall scores;
   - obtain a desired highest overall score for said set of translated texts (111 ... 11k) from a revisor;
   - obtain a desired lowest overall score for said set of translated texts (111 ... 11k) from said revisor; and
   - determine said adapted scores (402) for said translation errors such that said set of overall scores ranging from said lowest overall score to said highest overall score is re-scaled into a set of adapted overall scores ranging from said desired lowest overall score to said desired highest overall score.

6. A revision system (100) according to claim 1, wherein said revision module (120) is further configured to apply a score associated with a translation error only once in determining said overall score for said translated text when said translation error is found multiple times in said translated text.

7. A method for revising translated texts (111 ... 11k), said method comprising:

   - receiving a set (101) of translated texts (111 ... 11k) of a single source text;
   - storing translation errors associated with said translated texts (111 ... 11k) and respective scores (200; 300; 401) for said translation errors in a translation error memory (110);
   - searching for said translation errors in a translated text (111 ... 11k) out of said set (101), and determining an overall score for said translated text (111 ... 11k) from scores corresponding to translation errors found in said translated text (111 ... 11k); and
   - storing said translated text (111 ... 11k) together with said translation errors found in said translated text (111 ... 11k) and said overall score for said translated text (111 ... 11k) as a revised translated text in a revised text memory (130),

**CHARACTERISED IN THAT** said method further comprises:

- determining adapted scores (402) for said translation errors in said translation error memory (110) as a function of the set of overall scores determined for said set (101) of translated texts (111 ... 11k) stored in said revised text memory (130).

Fig. 1

EP 3 477 497 A1

EP 3 477 497 A1

200

| ERROR | SCORE |
|-------|-------|
| E1 | S1 |
| E2 | S2 |
| ... | ... |
| En | Sn |

**Fig. 2**

300

| ERROR | TRANSLATOR | SCORE |
|-------|------------|-------|
| E1 | T1 | S11 |
| ... | ... | ... |
| E1 | Tm | S1m |
| E2 | T1 | S21 |
| ... | ... | ... |
| E2 | Tm | S2m |
| ... | ... | ... |
| En | T1 | Sn1 |
| ... | ... | ... |
| En | Tm | Snm |

**Fig. 3**

**Fig. 4A**

| ERROR | SCORE |
|-------|-------|
| E1 | - 0,50 |
| E2 | - 1,00 |
| E3 | - 2,00 |

401

**Fig. 4B**

| ERROR | ADAPTED SCORE |
|-------|---------------|
| E1 | - 0,25 |
| E2 | - 0,50 |
| E3 | - 1,50 |

402

**Fig. 4C**

| TEXT | E1 | E2 | E3 | OVERALL | DESIRED | ADAPTED OVERALL |
|------|----|----|----|---------|---------|-----------------|
| 111 | 4 | 3 | 1 | 13 | | 16 |
| 112 | 2 | 2 | 1 | 15 | 17 | 17 |
| 113 | 3 | 3 | 2 | 11,50 | | 14,75 |
| 114 | 8 | 6 | 6 | - 2 | 6 | 6 |
| ... | ... | ... | ... | ... | | ... |
| 11k | 6 | 3 | 4 | 6 | | 11 |

403

Fig. 5

Europäisches
Patentamt

European
Patent Office

Office européen
des brevets

# EUROPEAN SEARCH REPORT

Application Number

EP 17 19 8121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONJA NIESSEN ET AL: "An Evaluation Tool for Machine Translation: Fast Evaluation for MT Research", INTERNATIONAL JOURNAL OF PRECISION ENGINEERING AND MANUFACTURING, vol. 18, 31 May 2000 (2000-05-31), pages 1567-1573, XP55467080, Springer ISSN: 2234-7593, DOI: 10.1007/s12541-017-0186-1 * abstract * * section 3 * * section 4 * * section 5, figure 5 * | 1-7 | INV. G06F17/28 |
| A | FLORENCE REEDER: "Direct Application of A Language Learner Test To MT Evaluation", EDUCATIONAL AND PSYCHOLOGICAL MEASUREMENT, August 2006 (2006-08), pages 166-175, XP055467764, US ISSN: 0013-1644 * abstract * * section 3 * | 1,7 | |
| A | SARA STYMNE: "BLAST: A Tool for Error Analysis of Machine Translation Output", PROCEEDINGS OF THE 49TH ANNUAL MEETING OF THE ASSOCIATION FOR COMPUTATIONAL LINGUISTICS: HUMAN LANGUAGE TECHNOLOGIES: SYSTEMS DEMONSTRATIONS, 21 June 2011 (2011-06-21), pages 56-61, XP55467077, Portland, Oregon, USA * abstract * * section 5 * | 1,7 | |

TECHNICAL FIELDS SEARCHED (IPC)

G06F

-----

-----

-/--

The present search report has been drawn up for all claims

| Place of search | Date of completion of the search | Examiner |
|---|---|---|
| Berlin | 18 April 2018 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EP 3 477 497 A1**

Europäisches
Patentamt

European
Patent Office

Office européen
des brevets

# EUROPEAN SEARCH REPORT

Application Number

EP 17 19 8121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Kristýna Stepánková: "Learner Translation Corpus: CELTraC (Czech-English Learner Translation Corpus)", Bachelor?s Diploma Thesis Masaryk University Faculty of Arts Department of English and American Studies, 2014, XP55466684, Retrieved from the Internet: URL:https://is.muni.cz/th/vcg70/Bakalarka_ -_CELTraC.pdf [retrieved on 2018-04-12] * Introduction * * section 3.3.1.1 * * section 4.2 * ----- | 1,7 | |

TECHNICAL FIELDS
SEARCHED (IPC)

The present search report has been drawn up for all claims

| Place of search | Date of completion of the search | Examiner |
|---|---|---|
| Berlin | 18 April 2018 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**EP 3 477 497 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ADAM OBRUSNIK.** A Hybrid Approach to Parallel Text Alignment. the Masaryk University Faculty of Arts, 2012

- **SIMON JAVORA.** Defining an Error Typology: the Case of CELTraC. the Masaryk University Faculty of Arts, 2015